# EUROPÄISCHE PATENTSCHRIFT

(11) **EP 2 703 647 B1**
(45) Veröffentlichungstag und Bekanntmachung des Hinweises auf die Patenterteilung: **04.10.2017**
(21) Anmeldenummer: 12182691.1
(22) Anmeldetag: 31.08.2012
(51) Int. Cl.: F04B 39/10, F16K 15/02

(54) **Poppetventil für einen Kompressor**
Poppet valve for a compressor
Soupape-champignon pour un compresseur

(43) Veröffentlichungstag der Anmeldung: 05.03.2014
(73) Patentinhaber: Burckhardt Compression AG, 8404 Winterthur (CH)
(72) Erfinder: Columpsi, Michele, 8357 Guntershausen bei Aadorf (CH)
(74) Vertreter: Dr. Graf & Partner AG

(56) Entgegenhaltungen:
- US-A- 4 607 660
- US-A- 5 511 583
- US-A1- 2010 090 149

## Beschreibung

Die Erfindung betrifft ein Poppetventil für einen Kompressor, einen Kolbenkompressor umfassend ein derartiges Poppetventil sowie einen Reparatursatz für ein Poppetventil.

### Stand der Technik

Die Druckschrift US2010/0090149 offenbart ein Poppetventil für einen Kompressor. Dieses Poppetventil weist einen Fänger auf, in welchem eine Mehrzahl von Bohrungen angebracht ist. In jeder der Bohrungen ist ein Schliesselement angeordnet. Das Schliesselement ist pilzförmig ausgestaltet und weist einen Stiel und einen Kopf auf, dessen Durchmesser grösser als der des Stiels ist. Der Stiel ist in der Bohrung des Fängers aufgenommen und enthält einen Hohlraum, in welchem eine Feder aufgenommen ist. Die Feder stützt sich an seinem dem Hohlraum gegenüber liegenden Ende auf einem Bodenelement ab, welches am Grund der Bohrung im Fänger angeordnet ist.
Der Kopf des Schliesselements ist derart ausgestaltet, dass er im geschlossenen Zustand eine Bohrung in der Ventilsitzplatte verschliesst, wobei die Ventilsitzplatte mit dem Fänger über eine Schraubverbindung verbunden ist. Das Schliesselement wird im drucklosen Zustand durch die Feder derart gehalten, dass die Bohrung in der Ventilsitzplatte geschlossen ist.

Das Schliesselement öffnet, wenn der Druck des Fluides, insbesondere des Gases, welches in die Bohrungen der Ventilsitzplatte in das Poppetventil einströmt, eine Kraft auf den Kopf des Schliesselements ausübt, welche die Federkraft der Feder übersteigt. Gemäss US2010/0090149 wird vorgeschlagen, die Dicke des Bodenelements zu variieren. Hierdurch wird die Vorspannung der Feder verändert und demzufolge der Druck, der eine Öffnung des Schliesselements zur Folge hat. Wenn in dem Ventil Bodenelemente verschiedener Dicke für ansonsten gleichartig ausgestaltete Schliesselemente und Federn verwendet werden, kann das Poppetventil zur Regelung des Fluiddurchsatzes verwendet werden.

Das aus der Druckschrift US2010/0090149 bekannte Poppetventil weist den Nachteil auf, dass dieses nach einer gewissen Betriebsdauer eine beeinträchtigte Funktionsweise aufweist, insbesondere wenn das Ventil mit einem verschmutzten Fluid betrieben wird, beispielsweise einem Gas welches Tröpfchen oder Partikel enthält. Dies führt zu einer Hemmung oder Blockierung der Bewegung der Schliesselemente, was zur Folge hat, dass die Schliesselemente in geschlossener Position verbleiben oder sich nicht mehr vollständig schliessen.

Die Druckschrift US 4,607,660 offenbart ein weiteres Ventil. Dieses Ventil weist unter anderem den Nachteil auf, dass die Lage des Schliesselementes nicht eindeutig definiert ist, was einen erhöhten Verschleiss zur Folge hat.

### Darstellung der Erfindung

Aufgabe der Erfindung ist es ein Poppetventil auszugestalten, das vorteilhaftere Betriebseigenschaften aufweist.

Diese Aufgabe wird gelöst mit einem Poppetventil aufweisend die Merkmale von Anspruch 1. Die Unteransprüche 2 bis 13 betreffen weitere, vorteilhafte Ausgestaltungen der Erfindung.

Die Aufgabe wird insbesondere gelöst mit einem Poppetventil umfassend einen Fänger, einen Ventilsitz sowie eine Mehrzahl von Schliesselementen, wobei der Fänger eine Mehrzahl von in einer axialen Richtung verlaufende Bohrungen aufweist, wobei die Bohrungen zum Ventilsitz hin offen sind und an einem bezüglich dem Ventilsitz entgegen gesetzten Ende ein Bodenelement aufweisen, wobei in den Bohrungen jeweils ein in axialer Richtung A verschiebbares Schliesselement angeordnet ist, wobei der Ventilsitz eine Mehrzahl von Durchgangsöffnungen aufweist, welche bezüglich den Bohrungen in axialer Richtung A gegenüber liegend angeordnet sind, derart, dass jede der Durchgangsöffnungen durch je eines der Schliesselemente verschliessbar ist, wobei in den Bohrungen jeweils ein Auflageelement angeordnet ist und wobei jeweils eine Feder zwischen dem Auflageelement und dem Schliesselement angeordnet ist, um eine zum Ventilsitz hin ausgerichtete Vorspannkraft auf das Schliesselement zu bewirken, wobei das Auflageelement zumindest einen bezüglich der Bohrung exzentrisch angeordneten Auflageelementdurchlass aufweist und wobei das Bodenelement zumindest einen bezüglich der Bohrung exzentrisch angeordneten Bodenelementdurchlass aufweist, um in axialer Richtung A einen bezüglich der Bohrung exzentrisch angeordneten Durchgang durch das Auflageelement sowie das Bodenelement auszubilden.

Das erfindungsgemässe Poppetventil weist den Vorteil auf, dass dieses einen bezüglich der Bohrung exzentrisch angeordneten Durchgang durch das Auflageelement sowie das Bodenelement aufweist, sodass sich Schmutzpartikel, welche in die Bohrung beziehungsweise zwischen die Bohrung und das Schliesselement gelangen über den exzentrisch angeordneten Durchgang aus der Bohrung ausgetragen werden können. In einer besonders vorteilhaften Ausgestaltung ist der exzentrisch angeordnete Durchgang im Bereich der Wand der Bohrung angeordnet, was den Vorteil ergibt, dass die Bewegung des Schliesselementes die Schmutzpartikel in Richtung zum Durchgang hin fördert, sodass sich eine selbsttätige Reinigung ergibt und ein selbsttätiger Austrag der Verunreinigungen aus der Bohrung hinaus erfolgt. Das in der Druckschrift US 2010/0090149 offenbarte Poppetventil weist dagegen den erheblichen Nachteil auf, dass das auf das Auflageelement aufprallende Schliesselement zur Folge hat, dass die Verunreinigung durch das aufprallende Schliesselement auf dem Auflageelement komprimiert werden, sodass sich die Verunreinigungen am Auflageelement kumulieren und das Auflageelement sich deshalb bereits nach relativ kurzer Betriebsdauer nur noch eingeschränkt innerhalb der Bohrung bewegen lässt. Ein weiterer Nachteil besteht darin, dass die Schliesselemente vorzeitig verschleissen.

Das erfindungsgemässe Poppetventil für einen Kompressor umfasst einen Fänger, einen Ventilsitz sowie eine Mehrzahl von Schliesselementen. Der Ventilsitz weist eine Mehrzahl von Durchgangsöffnungen auf, wobei jede der Durchgangsöffnungen durch je eines der Schliesselemente verschliessbar ist. Der Fänger weist eine zu der Anzahl der Schliesselemente korrespondierende Anzahl von Bohrungen auf, wobei jedes Schliesselement zumindest teilweise in der korrespondierenden Bohrung aufgenommen ist. Ein Auflageelement ist jeweils in der Bohrung angeordnet und die Feder ist jeweils zwischen dem Auflageelement und dem Schliesselement angeordnet. Das Bodenelement und das Auflageelement weisen einen exzentrisch angeordneten Durchlass auf, sodass die beiden Durchlasse bei entsprechender gegenseitiger Lage und/oder bei entsprechender Grösse einen durch das Bodenelement sowie das Auflageelement verlaufenden Durchgang ausbilden. Exzentrisch bedeutet in diesem Zusammenhang, dass die Mittenachse des Durchlasses verschieden von der Längsmittenachse der Bohrung ist, das heisst, dass die Mittenachse des Durchlasses nicht mit der Längsmittenachse der Bohrung zusammenfällt. Insbesondere kann die Mittenachse versetzt zu der Längsmittenachse verlaufen. In einer besonders vorteilhaften Ausführungsform verlaufen die Mittenachse und die Längsmittenachse gegenseitig parallel zueinander.

In einer vorteilhaften Ausführungsform umfasst der Durchgang einen exzentrisch im Auflageelement angeordneten Durchlass. Zudem umfasst der Durchgang einen exzentrisch im Bodenelement angeordneten Durchlass. Insbesondere kann der Durchlass des Auflageelements zumindest eine der nachfolgenden Formen umfassen: eine konkave Krümmung, eine v-förmige schlitzartige Ausnehmung, eine u-förmige schlitzartige Ausnehmung oder eine umfangsseitige Ausnehmung, welche durch eine lokale Verringerung des Aussendurchmessers des Auflageelements erhältlich ist. In einer weiteren Ausführungsform kann das Auflageelement eine Aussenkontur aufweisen, die zumindest teilweise einen Abstand von zumindest 2 mm von der Innenwand der Bohrung aufweist.

In einer besonders vorteilhaften Ausführungsform sind das Bodenelement sowie das Auflageelement derart gegenseitig angepasst ausgestaltet, dass der Durchgang ständig durchgehend geöffnet ist. In einer weiteren, vorteilhaften Ausführungsform sind das Bodenelement sowie das Auflageelement derart gegenseitig angepasst ausgestaltet, dass der Durchgang abhängig von der gegenseitigen Lage vom Auflageelement bezüglich dem Bodenelement entweder durchgehend geöffnet ist, oder teilweise oder sogar vollständig geschlossen ist. In einer vorteilhaften Ausführungsform ist das Auflageelement bewegglich in der Bohrung gelagert, insbesondere drehbar und/oder in Verlaufsrichtung der Bohrung verschiebbar. Diese Beweglichkeit des Auflageelements in der Bohrung kann den Austrag von Verschmutzungen aus der Bohrung zusätzlich unterstützen. Dadurch, dass sich der Durchgang verändert, abhängig von der gegenseitigen Lage vom Auflageelement zum Bodenelement, wird der Durchgang ständig von einer sich allfällig anlagernden Verschmutzung gereinigt, sodass gewährleistet ist, dass der Durchgang auch während eines langfristigen Betriebs des Poppetventils nicht verstopft wird.

In einer vorteilhaften Ausgestaltung weist das Auflageelement ein Führungselement für die Feder auf. Dieses Führungselement kann als ein Vorsprung ausgebildet sein, der sich innerhalb der Feder erstreckt. Die Feder umgreift somit den Vorsprung und wird durch den Vorsprung in seiner Lage fixiert.

Die Erfindung wird nachfolgend an Hand von Ausführungsbeispielen im Detail beschrieben.

### Kurze Beschreibung der Zeichnungen

Die zur Erläuterung der Ausführungsbeispiele verwendeten Zeichnungen zeigen:
- Fig. 1: eine Ansicht eines erfindungsgemässen Poppetventils;
- Fig. 2: einen Längsschnitt durch das Poppetventil gemäss Fig. 1;
- Fig. 3: eine Ansicht eines Auflageelements;
- Fig. 4: eine Draufsicht auf das Auflageelement gemäss Fig. 3;
- Fig. 5: eine Detailansicht eines Poppetventils;
- Fig. 6: eine Draufsicht auf ein Bodenelement;
- Fig. 7: eine Draufsicht auf beispielhafte Ausführungsformen von Auflageelementen;
- Fig. 8: eine Seitenansicht eines weiteren Ausführungsbeispiels eines Auflageelementes
- Fig. 9: eine perspektivische Ansicht eines weiteren Ausführungsbeispiels eines Poppetventils.

Grundsätzlich sind in den Zeichnungen gleiche Teile mit gleichen Bezugszeichen versehen.

### Wege zur Ausführung der Erfindung

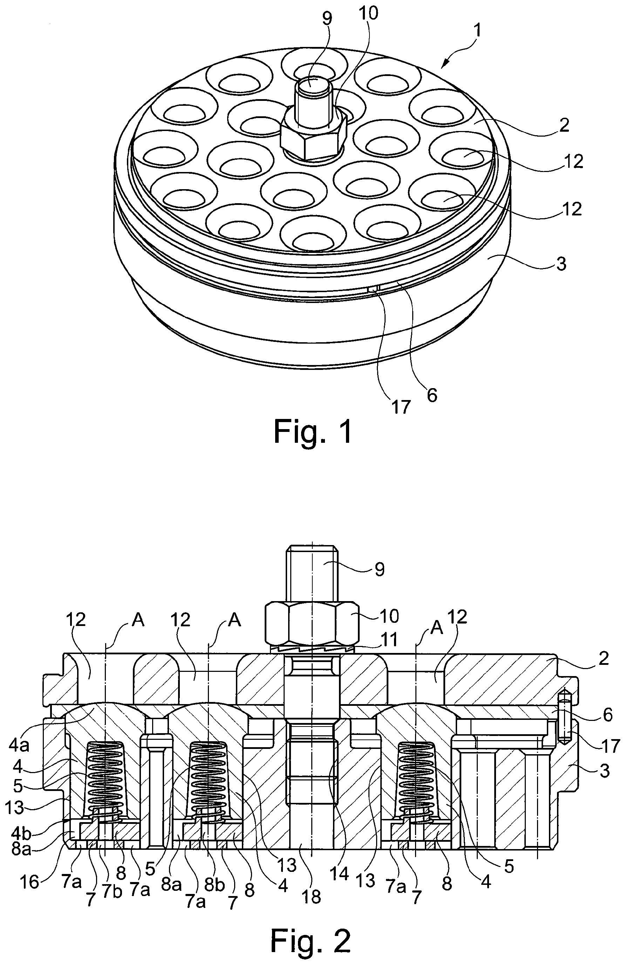

Fig. 1 zeigt in einer perspektivischen Ansicht ein Poppetventil 1 in zusammengebautem Zustand. Das Poppetventil 1 umfasst einen Ventilsitz 2 sowie einen Fänger 3. Zwischen dem Ventilsitz 2 und dem Fänger 3 ist eine Verschleissplatte 6 angeordnet. Der Fänger 3 ist über einen Schraubenbolzen 9 mit Mutter 10 mit dem Ventilsitz 2 verbunden. Der Ventilsitz 2 weist eine Mehrzahl von Durchgangsöffnungen 12 auf. Im vorliegenden Ausführungsbeispiel umfasst der Ventilsitz 2 achtzehn Durchgangsöffnungen 12. Ein Ventilsitz 2 kann je nach Durchmesser und Erfordernis auch eine andere Anzahl Durchgangsöffnungen 12 aufweisen.

Fig. 2 zeigt einen Längsschnitt durch das in Figur 1 dargestellte Poppetventil 1. Im dargestellten Ausführungsbeispiel ist zwischen dem Ventilsitz 2 und dem Fänger 3 die Verschleissplatte 6 angeordnet. In einem weiteren, nicht dargestellten Ausführungsbeispiel könnte auf diese Verschleissplatte 6 auch verzichtet werden. Der Fänger 3 ist über den Schraubenbolzen 9, die Mutter 10 sowie die Unterlagscheibe 11 mit dem Ventilsitz 2 verbunden. Der Schraubenbolzen 9 ist in einer zentrisch angeordneten Bohrung 18 des Fängers 3 mit Gewindebohrung 14 aufgenommen. Der Schraubenbolzen 9 weist ein Aussengewinde auf, welches mit der entsprechenden Gewindebohrung 14 im Eingriff steht. Ein Bolzen 17 verhindert zudem eine gegenseitige Verdrehung von Ventilsitz 2 und Fänger 3.

Der Ventilsitz 2 weist eine Mehrzahl von Durchgangsöffnungen 12 auf. Diese Durchgangsöffnungen 12 sind mittels Schliesselementen 4 verschliessbar. Die Verschleissplatte 6 ist unmittelbar angrenzend an den Ventilsitz 2 angeordnet. Die Verschleissplatte 6 enthält ebenfalls Durchgangsöffnungen, die im zusammengebauten Zustand mit den Durchgangsöffnungen 12 des Ventilsitzes 2 fluchten.

Der Fänger 3 weist eine Mehrzahl von in einer axialen Richtung A verlaufenden Bohrungen 13 auf, wobei die Bohrungen 13 zum Ventilsitz 2 hin offen sind und wobei die Bohrung 13 an einem bezüglich dem Ventilsitz 2 entgegen gesetzten Ende in einem Bodenelement 7 endet. In jeder Bohrung 13 ist jeweils ein in axialer Richtung A verschiebbares Schliesselemente 4 angeordnet, wobei der Ventilsitz 2 eine Mehrzahl von Durchgangsöffnungen 12 aufweist, welche bezüglich den Bohrungen 13 in axialer Richtung A gegenüber liegend angeordnet sind, derart, dass jede der Durchgangsöffnungen 12 durch je eines der Schliesselemente 4 verschliessbar ist. In den Bohrungen 13 ist jeweils ein Auflageelement 8 angeordnet welches am Bodenelement 7 anliegt, wobei jeweils eine Feder 5 zwischen dem Auflageelement 8 und dem Schliesselement 4 angeordnet ist, um eine zum Ventilsitz 2 hin ausgerichtete Vorspannkraft auf das Schliesselement 4 zu bewirken. Das Auflageelement 8 weist zumindest einen bezüglich der Bohrung 13 beziehungsweise einen bezüglich der Achse A exzentrisch angeordneten Auflageelementdurchlass 8a auf. Zudem weist das Bodenelement 7 zumindest einen bezüglich der Bohrung 13 exzentrisch angeordneten Bodenelementdurchlass 7a aufweist, um in axialer Richtung A einen bezüglich der Bohrung 13 beziehungsweise der Achse A exzentrisch angeordneten Durchgang 16 durch das Auflageelement 8 sowie das Bodenelement 7 auszubilden.

Das Schliesselement 4 ist innerhalb der Bohrung 13 in Verlaufsrichtung der Achse A verschiebbar gelagert. Der exzentrisch angeordnete Durchgang 16 weist den Vorteil auf, dass Verschmutzungen, welche sich im Spalt zwischen der Bohrung 13 und dem Schliesselement 4 befinden, von der unteren Schulter 4b des Schliesselementes 4 durch den Durchgang 16 aktiv nach unten gefördert beziehungsweise gestossen werden, sodass allfällige Verschmutzungen und Verunreinigungen über den Durchgang 16 nach unten aus dem Poppetventil 1 hinausgefördert werden. Der Durchgang 16 weist somit den Vorteil auf, dass das Poppetventil 1 sich selbsttätig reinigen kann, und dass dadurch eine Ansammlung und Ablagerung von Schmutz innerhalb der Bohrungen 13 erheblich reduziert oder sogar gänzlich vermieden wird. Dies ergibt den Vorteil, dass das erfindungsgemässe Poppetventil 1 vorzugsweise während eine längeren Zeitspanne beispielsweise mehreren 1000 Betriebsstunden wartungsfrei betrieben werden kann.

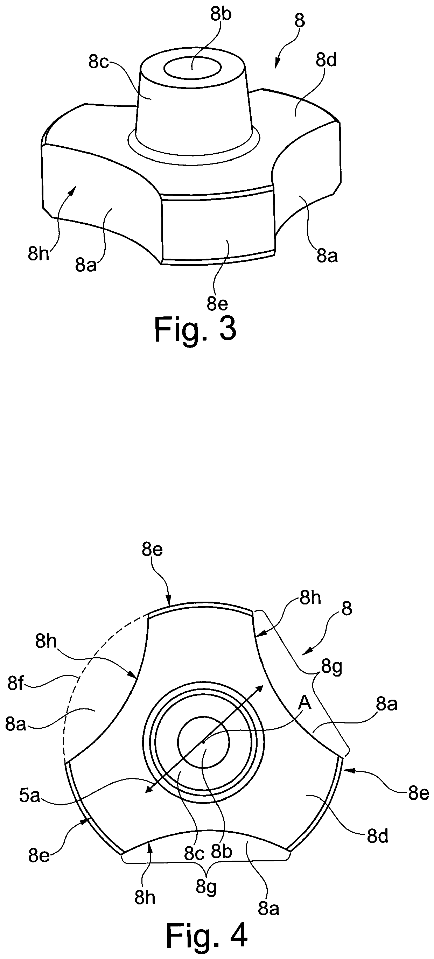

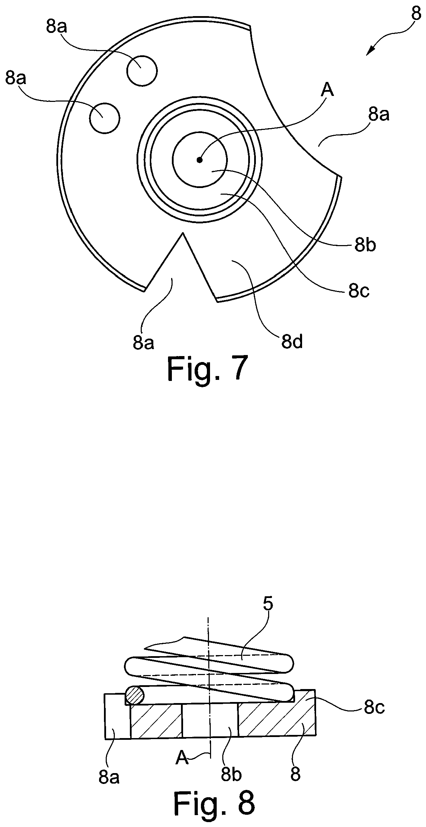

Figur 3 zeigt das in Figur 2 dargestellte Auflageelement 8 in perspektivischer Ansicht. Das Auflageelement 8 umfasst einen Grundkörper 8d mit einer kreisförmig verlaufenden Aussenumfangsfläche 8e, wobei der Grundkörper 8d in Umfangsrichtung zumindest ein Abschnitt 8g aufweist, entlang welchem der Grundkörper 8d einen reduzierten Durchmesser aufweist, um entlang des Abschnitts 8g den Auflageelementdurchlass 8a auszubilden. Der reduzierte Durchmesser reduziert sich vorzugsweise um zumindest 2 mm. Im dargestellten Ausführungsbeispiel ist die Seitenfläche 8h des Auflageelementes 8, welche den exzentrisch angeordneten Durchlass 8a ausbildet, konkav verlaufend ausgestaltet. Es gibt eine Vielzahl von Ausführungsmöglichkeiten wie der Verlauf der Seitenfläche 8h ausgestaltet sein könnte, um zwischen der Seitenfläche 8h und der Innenwand der Bohrung 13 einen Durchlass 8a auszubilden. In einer vorteilhaften Ausgestaltung weist das Auflageelement 8, wie in Figur 4 dargestellt, in Umfangsrichtung eine Mehrzahl von Seitenfläche 8h mit reduziertem Durchmesser auf, um in Umfangsrichtung eine Mehrzahl von Durchlässen 8a auszubilden. Im dargestellten Ausführungsbeispiel werden drei Durchlässe 8a ausgebildet. In einer vorteilhaften Ausgestaltung weist der Grundkörper 8d entlang des Abschnitts 8g in Umfangsrichtung einen konkaven Verlauf auf.
In einer weiteren vorteilhaften Ausgestaltung weist der Grundkörper 8d, wie in Figur 7 dargestellt, zumindest eine Durchbrechung 8a auf, welche den Auflageelementdurchlass 8a ausbildet. In einer weiteren vorteilhaften Ausgestaltung weist das Auflageelement 8 eine Mehrzahl von in Umfangsrichtung gegenseitig beabstandete Auflageelementdurchlässe 8a auf. In einer vorteilhaften Ausgestaltung weist das Auflageelement 8 ein Führungselement 8c für die Feder 5 auf. Vorteilhafterweise kann das Auflageelement 8, wie in Figur 2 dargestellt, eine durchgehende Zentralbohrung 8b aufweisen. In einer vorteilhaften Ausgestaltung weist die in axialer Richtung A verlaufende Feder 5 einen Aussendurchmesser 5a aufweist, wobei die Auflageelementdurchlässe 8a, wie in Figur 4 dargestellt, ausserhalb dieses Aussendurchmessers 5a angeordnet sind.

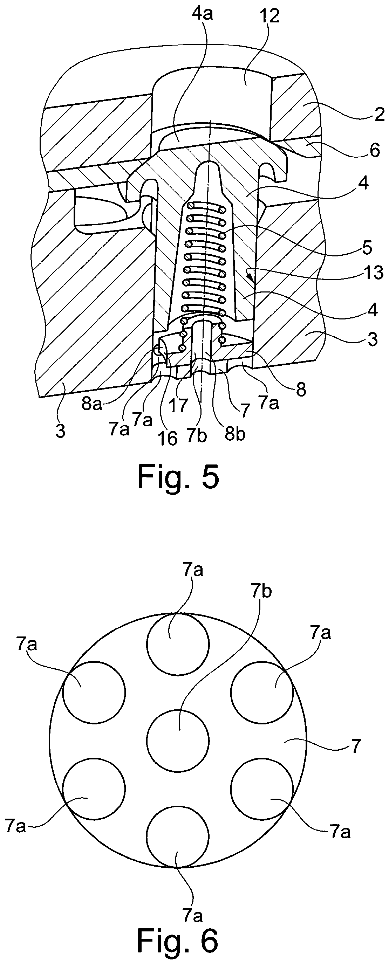

Figur 5 zeigt einen Fänger 3 mit Bohrung 13 und darin angeordnetem Schliesselement 4 im Detail. Das Auflageelement 8 liegt auf dem Bodenelement 7 auf, wobei das Auflageelement 8 und das Bodenelement 7 derart gegenseitig angeordnet sind, dass sich über die in Verlaufsrichtung der Achse A nacheinander folgend angeordneten Durchlässen 8a, 7a ein Durchgang 16 ausbildet. Figur 6 zeigt eine Draufsicht auf das in Figur 5 dargestellte Bodenelement 7, wobei das Bodenelement in Umfangsrichtung eine Mehrzahl von exzentrisch angeordneten Durchlässen 7a aufweist. Zudem kann das Bodenelement 7 einen zentrisch angeordneten Durchlass 7b aufweisen. In einer vorteilhaften Ausgestaltung weist sowohl das Auflageelement 8 eine Zentralbohrung 8b auf als auch das Bodenelement 7 einen zentrisch angeordneten Durchlass 7b auf, um im Zentrum einen zusätzlichen Durchlass 17 auszubilden. Das in Figur 5 verwendete Auflageelement 8 ist wie in den Figuren 3 und 4 dargestellt ausgestaltet, sodass sich in der in Figur 5 dargestellten Anordnung drei in Umfangsrichtung verteilt angeordnete Durchgänge 16 ausbilden. In einer vorteilhaften Ausgestaltung ist das Auflageelement 8 beweglich in der Bohrung 13 angeordnet, sodass dieses drehbar und/oder in axialer Richtung A verschiebbar in der Bohrung 13 gelagert ist. Dieses Drehen und/oder Verschieben weist einen zusätzlichen reinigenden Effekt aus, und hilft allfällige Verunreinigungen aus der Bohrung 13 hinauszufördern.

Figur 7 zeigt in einer Draufsicht ein Auflageelement 8 mit drei unterschiedlichen Ausführungsformen von exzentrisch angeordneten Durchlässen 8a. Der rechts angeordnete Durchlass 8a entspricht dem in Figur 4 dargestellten Durchlass 8a und wurde im Zusammenhang mit Figur 4 bereits im Detail beschrieben. Der Durchlass 8a kann auch, wie oben links in Figur 7 dargestellt, als Durchbrechung oder als Bohrung ausgestaltet sein. Es könne eine oder auch mehrere derartige Durchbrechungen in Umfangsrichtung verteilt angeordnet sein. Die Durchlässe können in einer Vielzahl von Möglichkeiten ausgestaltet sein, derart, dass diese exzentrisch bezüglich der Mittenachse A des Auflageelementes 8 angeordnet sind. Die Figur 7 zeigt unten einen weiteren beispielhaften Durchlass 8a, der schlitzförmig beziehungsweise v-förmig ausgestaltet ist.

Das in Figur 6 dargestellte Bodenelement 7 muss zumindest einen exzentrisch angeordneten Durchlass 7a aufweisen. Der zumindest eine Durchlass 7a kann in einer Vielzahl von Formen ausgestaltet sein, und beispielsweise auch die in Figur 7 dargestellten Formen der Durchlässe 8a aufweisen. Wichtig ist einzig, dass die exzentrisch angeordneten Durchlässe 7a, 8a derart gegenseitig angepasst angeordnet sind, dass sich ein gemeinsamer Durchgang 16 ausbilden kann. In einer vorteilhaften Ausgestaltung ist das Auflageelement 8 verdrehbar in der Bohrung 13 gelagert. In einer vorteilhaften Ausgestaltung sind die exzentrisch angeordneten Durchlässe 7a, 8a derart gegenseitig angepasst ausgestaltet, dass sich zumindest während gewissen Zeitabschnitten und vorzugsweise dauernd ein offener Durchgang 16 ausbildet.

Das Auflageelement 8 kann in einer Vielzahl von Ausführungsformen ausgestaltet sein, um die Funktion zu erfüllen die Feder 5 in einer zentralen Lage zu halten und zudem einen exzentrisch angeordneten Durchlass 8a aufzuweisen. Figur 8 zeigt ein weiteres Ausführungsbeispiel eines derartigen Auflageelementes 8 mit einem kreisförmig verlaufenden Führungselement 8c, innerhalb welchem die Feder 5 auf dem Auflageelement 8 aufliegt und zentriert ist. Das Auflageelement 8 weist zudem zumindest einen exzentrisch angeordneten Durchlass 8a auf, von welchem beispielhaft eine mögliche Ausführungsform dargestellt ist. Das Auflageelement 8 kann jedoch auch scheibenförmig ausgestaltet sein, ohne ein Führungselement 8c.

In einer vorteilhaften Ausgestaltung weist das Auflageelement 8 bezüglich der Wand der Bohrung 13 ein Spiel auf, sodass das Auflageelement 8 radial zur Bohrung 13 eine Oszillationsbewegung ausführen kann.

In einer vorteilhaften Ausgestaltung ist zudem ein Reparatursatz für das Poppetventil 1 vorgesehen, wobei der Reparatursatz zumindest ein Schliesselement 4 und zumindest ein Auflageelement 8 mit einem exzentrisch angeordneten Auflageelementdurchlass 8a umfasst. Üblicherweise unterliegen die Schliesselemente 4 sowie die Auflageelemente 8 während dem Betrieb des Poppetventils 1 einem Verschleiss, sodass diese nach einer gewissen Betriebszeit zu ersetzen sind. Es kann sich als vorteilhaft erweisen, wenn der Reparatursatz zudem noch zumindest eine Feder 5 umfasst.

Beim erfindungsgemässen Poppetventil wird allfällig vorhandener Schmutz vorteilhafterweise zusammen mit einem zwischen der Wand der Bohrung 13 und dem Schliesselement 4 fliessenden Bypassfluid ausgetragen. Eine Ansammlung von Schmutzablagerung im Bereich des Auflageelementes 8 und/oder des Bodenelementes 7 wird vermieden, sodass vorteilhafterweise ein kontinuierlicher Betrieb des Poppetventils über einen Zeitraum von beispielsweise mehreren 1000 Betriebsstunden möglich ist.

Selbstverständlich können die Bodenelemente 7 und/oder Auflageelemente 8 der einzelnen Ausführungsbeispiele beliebig kombiniert werden. Insbesondere kann ein Bodenelement 7 oder ein Auflageelement 8 auch mehrere unterschiedlich ausgeformte exzentrisch angeordnete Durchlässe 7a, 8a aufweisen. Das Poppetventil 1 umfasst, wie in Figur 2 dargestellt eine Mehrzahl von Bodenelementen 7 und Auflageelementen 8. Es besteht die Möglichkeit zumindest einige der Bodenelemente 7 und/oder der Auflageelemente 8 mit unterschiedlich ausgeformten exzentrisch angeordneten Durchlässen 7a, 8a zu versehen.

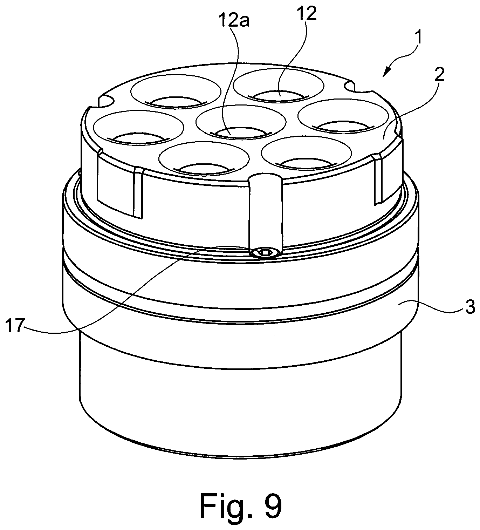

In einer weiteren, in Figur 9 dargestellten Ausführungsform könnte das in den Figuren 1 und 2 dargestellte Poppetventil 1 auch ohne Schraubbolzen 9, Mutter 10, Unterlagscheibe 11 und Gewindebohrung 14 ausgestaltet sein, indem der Ventilsitz 2 und der Fänger 3 über beispielsweise eine Mehrzahl von in Umfangsrichtung verteilt angeordneten Befestigungsmitteln 17 wie Schrauben gegenseitig miteinander verbunden sind. Bei einer solchen Ausgestaltung erweist es sich wie in Figur 9 dargestellt als vorteilhaft im Zentrum ebenfalls ein Schliesselement 4 anzuordnen. Figur 9 zeigt im Zentrum eine Durchgangsöffnung 12a, unterhalbe welcher, wie in Figur 2 dargestellt, ein verschiebbares Schliesselement 4, eine Bodenelement 7 mit Bodenelementdurchlass 7a sowie ein Auflageelement 8 mit Feder 5 vorgesehen sein, sodass das in Figur 9 dargestellte Poppetventil 1 auch im Zentrum eine Durchgangsöffnung 12a aufweist, welche über das Schliesselement 4 verschliessbar ist. Die Durchgangsöffnung 12a und die darunter angeordnete Bohrung 13 und das darin verschiebbar gelagerte Schliesselement 4 mit Feder 5 ist vorzugsweise identisch ausgestaltet wie die in Figur 2 dargestellte Durchgangsöffnung 12 mit Bohrung 13, Schliesselement 4 und Feder 5. Auch das in den Figuren 1 und 2 dargestellte Poppetventil 1 könnte derart ausgestaltet sein, dass dieses an Stelle des Schraubenbolzens 9 eine im Zentrum angeordnete Durchgangsöffnung 12 aufweist. Eine derartige Ausführungsform weist gegenüber der in den Figuren 1 und 2 dargestellten Ausführungsform den Vorteil auf, dass diese eine grössere Anzahl Durchgangsöffnungen 12,12a aufweist, und somit eine grössere Durchflussmenge ermöglicht.

## Patentansprüche

1. Poppetventil (1) für einen Kompressor, umfassend einen Fänger (3), einen Ventilsitz (2) sowie eine Mehrzahl von Schliesselementen (4), wobei der Fänger (3) eine Mehrzahl von in einer axialen Richtung (A) verlaufende Bohrungen (13) aufweist, wobei die Bohrungen (13) zum Ventilsitz (2) hin offen sind und an einem bezüglich dem Ventilsitz (2) entgegen gesetzten Ende ein Bodenelement (7) aufweisen, wobei in den Bohrungen (13) jeweils ein in axialer Richtung (A) verschiebbares Schliesselemente (4) angeordnet ist, wobei der Ventilsitz (2) eine Mehrzahl von Durchgangsöffnungen (12) aufweist, welche bezüglich den Bohrungen (13) in axialer Richtung (A) gegenüber liegend angeordnet sind, derart, dass jede der Durchgangsöffnungen (12) durch je eines der Schliesselemente (4) verschliessbar ist, wobei in den Bohrungen (13) jeweils ein Auflageelement (8) angeordnet ist und wobei jeweils eine Feder (5) zwischen dem Auflageelement (8) und dem Schliesselement (4) angeordnet ist, um eine zum Ventilsitz (2) hin ausgerichtete Vorspannkraft auf das Schliesselement (4) zu bewirken, **dadurch gekennzeichnet, dass** das Auflageelement (8) zumindest einen bezüglich der Bohrung (13) exzentrisch angeordneten Auflageelementdurchlass (8a) aufweist und dass das Bodenelement (7) zumindest einen bezüglich der Bohrung (13) exzentrisch angeordneten Bodenelementdurchlass (7a) aufweist, um in axialer Richtung (A) einen bezüglich der Bohrung (13) exzentrisch angeordneten Durchgang (16) durch das Auflageelement (8) sowie das Bodenelement (7) auszubilden.

2. Poppetventil nach Anspruch 1, **dadurch gekennzeichnet, dass** der Auflageelementdurchlass (8a) derart ausgestaltet ist, dass das Auflageelement (8) einen Grundkörper (8d) aufweist, welcher am Bodenelement (7) aufliegt, und dass der Grundkörper (8d) in Umfangsrichtung zumindest ein Abschnitt (8g) aufweist, entlang welchem der Grundkörper (8d) einen reduzierten Durchmesser aufweist, um entlang des Abschnitts (8g) den Auflageelementdurchlass (8a) auszubilden, wobei der reduzierte Durchmesser sich vorzugsweise um zumindest 2 mm reduziert.

3. Poppetventil nach Anspruch 2, **dadurch gekennzeichnet, dass** der Grundkörper (8d) entlang des Abschnitts (8g) in Umfangsrichtung einen konkaven Verlauf aufweist.

4. Poppetventil nach Anspruch 1, **dadurch gekennzeichnet, dass** das Auflageelement (8) einen Grundkörper (8d) aufweist, und dass der Grundkörper (8d) zumindest eine Durchbrechung aufweist, welche den Auflageelementdurchlass (8a) ausbildet.

5. Poppetventil nach einem der vorhergehenden Ansprüche, **dadurch gekennzeichnet, dass** in Umfangsrichtung des Auflageelementes (8) eine Mehrzahl von gegenseitig beabstandeten Auflageelementdurchlässen (8a) angeordnet sind.

6. Poppetventil nach einem der vorhergehenden Ansprüche, **dadurch gekennzeichnet, dass** die in axialer Richtung (A) verlaufende Feder (5) einen Aussendurchmesser (5a) aufweist, und dass die Auflageelementdurchlässe (8a) ausserhalb dieses Aussendurchmessers (5a) angeordnet sind.

7. Poppetventil nach einem der vorhergehenden Ansprüche, **dadurch gekennzeichnet, dass** das Bodenelement (7) eine Mehrzahl von in Umfangsrichtung des Bodenelements (7) beabstandet angeordneten Bodenelementdurchlässe (7a) aufweist.

8. Poppetventil nach Anspruch 7, **dadurch gekennzeichnet, dass** die Bodenelementdurchlässe (7a) als Bohrungen ausgestaltet sind.

9. Poppetventil nach einem der vorhergehenden Ansprüche, **dadurch gekennzeichnet, dass** das Auflageelement (8) beweglich in der Bohrung (13) gelagert ist, insbesondere drehbar und/oder in axialer Richtung (A) verschiebbar.

10. Poppetventil nach einem der vorhergehenden Ansprüche, **dadurch gekennzeichnet, dass** der zumindest eine Bodenelementdurchlasse (7a) und der zumindest eine Auflageelementdurchlass (8a) derart gegenseitig angepasst ausgestaltet sind, dass sich in jeder möglichen Lage des Auflageelementes (8) bezüglich dem Bodenelement (7) ein geöffneter Durchgang (16) durch das Auflageelement (8) sowie das Bodenelement (7) ausbildet.

11. Poppetventil nach einem der vorhergehenden Ansprüche, **dadurch gekennzeichnet, dass** das Auflageelement (8) bezüglich der Wand der Bohrung (13) ein Spiel aufweist, derart, dass das Auflageelement (8) radial zur axialen Richtung (A) eine Oszillationsbewegung ausführen kann.

12. Poppetventil nach einem der vorhergehenden Ansprüche, **dadurch gekennzeichnet, dass** das Auflageelement (8) um dessen Längsachse (A) drehbar gelagert ist.

13. Poppetventil nach einem der vorhergehenden Ansprüche, wobei das Auflageelement (8) ein Führungselement (8c) für die Feder (5) aufweist.

14. Kolbenkompressor umfassend ein Poppetventil (1) nach einem der vorhergehenden Ansprüche.

## Claims

1. A poppet valve (1) for a compressor, comprising a cage (3), a valve seat (2) and a plurality of closing elements (4), wherein the cage (3) has a plurality of bores (13) running in an axial direction (A), wherein the bores (13) are open towards the valve seat (2) and have a bottom element (7) at an end opposite the valve seat (2), wherein a closing element (4) which is moveable in the axial direction (A) is arranged in each bore (13), wherein the valve seat (2) has a plurality of passage openings (12) which are arranged opposite the bores (13) in the axial direction (A) such that each of the passage openings (12) can be closed by one of the closing elements (4), wherein a support element (8) is arranged in each of the bores (13) and wherein a spring (5) is arranged between each support element (8) and the respective closing element (4) in order to apply a preload force directed towards the valve seat (2) to the closing element (4), **characterized in that** the support element (8) has at least one support element opening (8a) arranged eccentrically in relation to the bore (13), and that the bottom element (7) has at least one bottom element opening (7a) arranged eccentrically in relation to the bore (13), in order to form a passage (16) arranged eccentrically in relation to the bore (13) in the axial direction (A) through the support element (8) and the bottom element (7).

2. The poppet valve as claimed in claim 1, **characterized in that** the support element opening (8a) is configured such that the support element (8) has a base body (8d) which lies on the bottom element (7), and that the base body (8d) has at least one portion (8g) in the peripheral direction along which the base body (8d) has a reduced diameter in order to form the support element opening (8a) along the portion (8g), wherein the reduced diameter is reduced preferably by at least 2 mm.

3. The poppet valve as claimed in claim 2, **characterized in that** the base body (8d) has a concave form along portion (8g) in the peripheral direction.

4. The poppet valve as claimed in claim 1, **characterized in that** the support element (8) has a base body (8d), and that the base body (8d) has at least one orifice which forms the support element opening (8a).

5. The poppet valve as claimed in any of the preceding claims, **characterized in that** a plurality of support element openings (8a) is arranged spaced apart in the peripheral direction of the support element (8).

6. The poppet valve as claimed in any of the preceding claims, **characterized in that** the spring (5) running in the axial direction (A) has an outer diameter (5a), and that the support element openings (8a) are arranged outside this outer diameter (5a).

7. The poppet valve as claimed in any of the preceding claims, **characterized in that** the bottom element (7) has a plurality of bottom element openings (7a) arranged spaced apart in the peripheral direction of the bottom element (7).

8. The poppet valve as claimed in claim 7, **characterized in that** the bottom element openings (7a) are configured as bores.

9. The poppet valve as claimed in any of the preceding claims, **characterized in that** the support element (8) is mounted moveably in the bore (13), in particular rotatably and/or displaceably in the axial direction (A).

10. The poppet valve as claimed in any of the preceding claims, **characterized in that** the at least one bottom element opening (7a) and the at least one support element opening (8a) are configured adapted to each other, such that in every possible position of the support element (8) relative to the bottom element (7), an open passage (16) is formed through the support element (8) and the bottom element (7).

11. The poppet valve as claimed in any of the preceding claims, **characterized in that** the support element (8) has a play relative to the wall of the bore (13) such that the support element (8) can execute an oscillation movement radially to the axial direction (A).

12. The poppet valve as claimed in any of the preceding claims, **characterized in that** the support element (8) is mounted rotatably about its longitudinal axis (A).

13. The poppet valve as claimed in any of the preceding claims, wherein the support element (8) has a guide element (8c) for the spring (5).

14. A piston compressor comprising a poppet valve (1) as claimed in any of the preceding claims.

## Revendications

1. Soupape à clapet (1) destinée à un compresseur, comprenant un récepteur (3), un siège de soupape (2) ainsi qu'une multiplicité d'éléments de fermeture (4), dans laquelle le récepteur (3) présente une multiplicité de trous (13) s'étendant dans une direction axiale (A), dans laquelle les trous (13) sont ouverts en direction du siège de soupape (2) et présentent un élément de fond (7) à une extrémité située à l'opposé du siège de soupape (2), dans laquelle un élément de fermeture (4) déplaçable en direction axiale (A) est respectivement disposé dans les trous (13), dans laquelle le siège de soupape (2) présente une multiplicité d'ouvertures de passage (12), qui sont disposées en face par rapport aux trous (13) en direction axiale (A), de telle manière que chacune des ouvertures de passage (12) puisse être fermée chaque fois par un des éléments de fermeture (4), dans laquelle un élément d'appui (8) est respectivement disposé dans les trous (13) et dans laquelle un ressort (5) est respectivement disposé entre l'élément d'appui (8) et l'élément de fermeture (4), afin d'exercer sur l'élément de fermeture (4) une force de précontrainte dirigée vers le siège de soupape (2), **caractérisée en ce que** l'élément d'appui (8) présente au moins un passage d'élément d'appui (8a) disposé de façon excentrique par rapport au trou (13) et **en ce que** l'élément de fond (7) présente au moins un passage d'élément de fond (7a) disposé de façon excentrique par rapport au trou (13), afin de former en direction axiale (A) un passage (16) disposé de façon excentrique par rapport au trou (13) à travers l'élément d'appui (8) ainsi qu'à travers l'élément de fond (7).

2. Soupape à clapet selon la revendication 1, **caractérisée en ce que** le passage d'élément d'appui (8a) est configuré de telle manière que l'élément d'appui (8) présente un corps de base (8d), qui repose sur l'élément de fond (7), et **en ce que** le corps de base (8d) présente en direction périphérique au moins une partie (8g), le long de laquelle le corps de base (8d) présente un diamètre réduit, afin de former le passage d'élément d'appui (8a) le long de la partie (8g), dans laquelle le diamètre réduit se réduit de préférence d'au moins 2 mm.

3. Soupape à clapet selon la revendication 2, **caractérisée en ce que** le corps de base (8d) présente le long de la partie (8g) en direction périphérique une allure concave.

4. Soupape à clapet selon la revendication 1, **caractérisée en ce que** l'élément d'appui (8) présente un corps de base (8d), et **en ce que** le corps de base (8d) présente au moins une percée, qui forme le passage d'élément d'appui (8a).

5. Soupape à clapet selon l'une quelconque des revendications précédentes, **caractérisée en ce qu'**une multiplicité de passages d'élément d'appui (8a) mutuellement espacés sont disposés dans la direction périphérique de l'élément d'appui (8).

6. Soupape à clapet selon l'une quelconque des revendications précédentes, **caractérisée en ce que** le ressort (5) orienté dans la direction axiale (A) présente un diamètre extérieur (5a) et **en ce que** les passages d'élément d'appui (8a) sont disposés à l'extérieur de ce diamètre extérieur (5a).

7. Soupape à clapet selon l'une quelconque des revendications précédentes, **caractérisée en ce que** l'élément de fond (7) présente une multiplicité de passages d'élément de fond (7a) disposés de façon espacée dans la direction périphérique de l'élément de fond (7).

8. Soupape à clapet selon la revendication 7, **caractérisée en ce que** les passages d'élément de fond (7a) sont réalisés en forme d'alésages.

9. Soupape à clapet selon l'une quelconque des revendications précédentes, **caractérisée en ce que** l'élément d'appui (8) est monté de façon mobile dans le trou (13), en particulier de façon rotative et/ou de façon déplaçable en direction axiale (A).

10. Soupape à clapet selon l'une quelconque des revendications précédentes, **caractérisée en ce que** ledit au moins un passage d'élément de fond (7a) et ledit au moins un passage d'élément d'appui (8a) sont configurés de façon mutuellement adaptée, de telle manière qu'il se forme dans chaque position possible de l'élément d'appui (8) par rapport à l'élément de fond (7) un passage ouvert (16) à travers l'élément d'appui (8) ainsi qu'à travers l'élément de fond (7).

11. Soupape à clapet selon l'une quelconque des revendications précédentes, **caractérisée en ce que** l'élément d'appui (8) présente un jeu par rapport à la paroi du trou (13), de telle manière que l'élément d'appui (8) puisse exécuter un mouvement d'oscillation radialement par rapport à la direction axiale (A).

12. Soupape à clapet selon l'une quelconque des revendications précédentes, **caractérisée en ce que** l'élément d'appui (8) est monté de façon rotative autour de son axe longitudinal (A).

13. Soupape à clapet selon l'une quelconque des revendications précédentes, **caractérisée en ce que** l'élément d'appui (8) présente un élément de guidage (8c) pour le ressort (5).

14. Compresseur à piston comprenant une soupape à clapet (1) selon l'une quelconque des revendications précédentes.
